# FASCICULE DE BREVET EUROPEEN

(11) **EP 3 025 167 B1**
(45) Date de publication et mention de la délivrance du brevet: **06.11.2019**
(21) Numéro de dépôt: 14750556.4
(22) Date de dépôt: 04.07.2014
(51) Int. Cl.: G01T 1/20, G01T 1/29

(54) **PROCEDE DE DETERMINATION DE LA PROFONDEUR D'UNE INTERACTION DANS UN DETECTEUR DE RADIATION PIXELISE, DETECTEUR ET APPLICATION ASSOCIES**
VERFAHREN ZUR BESTIMMUNG DER WECHSELSWIRKUNGSTIEFE IN EINEM PIXELIERTEN DETEKTOR, DETEKTOR UND ENTSPRECHENDE ANWENDUNGEN
METHOD OF DETERMINATION OF THE DEPTH OF INTERACTION IN A PIXELLATED RADIATION DETECTOR, DETECTOR AND RELATED APPLICATIONS

(30) Priorité: 24.07.2013 FR 1357315
(43) Date de publication de la demande: 01.06.2016
(73) Titulaire: Iltis, Alain, 10000 Troyes (FR)
(72) Inventeur: Iltis, Alain, 10000 Troyes (FR)
(74) Mandataire: Debay, Damien
(86) Numéro de dépôt international: PCT/FR2014/051739
(87) Numéro de publication internationale: WO 2015/011360

(56) Documents cités:
- WO-A1-2013/101956
- US-A1- 2010 108 896
- US-A1- 2013 020 487
- J-F PRATTE ET AL: "Design of a Fast-Shaping Amplifier for PET/CT APD Detectors With Depth-of-Interaction", IEEE TRANSACTIONS ON NUCLEAR SCIENCE, IEEE SERVICE CENTER, NEW YORK, NY, US, vol. 49, no. 5, 1 octobre 2002 (2002-10-01), XP011077838, ISSN: 0018-9499

## Description

### DOMAINE TECHNIQUE DE L'INVENTION

L'invention se rapporte à l'imagerie de sources de rayons gamma, plus particulièrement, l'invention concerne un procédé de détermination de la profondeur d'une interaction dans un détecteur pixélisé de radiation gamma par scintillation ainsi que le détecteur pixélisé utilisant un effet temporel pour mesurer la profondeur d'une interaction et application dudit détecteur à l'imagerie PET ou TEP (tomographie par émission de positrons).

La tomographie par émission de positrons (TEP ou PET) est une technique d'imagerie nucléaire utilisant des noyaux radioactifs. Ceux-ci se désintégrent en émettant un positron qui, en interagissant avec les noyaux voisins, produit deux photons gammas émis à 180º. Un scanner PET conventionnel est constitué de modules de détection entourant le patient et orientés radialement vers le centre du système.

### ETAT DE LA TECHNIQUE ANTERIEURE

Dans les détecteurs de rayons gamma par scintillation en général, il est préférable de connaître la profondeur de l'interaction vis-à-vis de la face d'entrée du rayonnement sur le cristal. C'est en particulier vrai, dans les détecteurs de type PET utilisant le temps de vol (TOF), où un anneau de cristaux à grand facteur de forme (pixels 4^{∗}4^{∗}30 mm) est organisé autour d'une source centrale. En effet, ne pas connaître le lieu d'interaction, en tête ou en pied de cristal, induit deux erreurs :
- Une parallaxe géométrique ;
- Une incertitude vis-à-vis du temps de vol exact du photon du fait de la propagation de la lumière dans le cristal à une vitesse inférieure à celle de la lumière dans le vide (c/n).

Plusieurs approches ont été étudiées afin d'ajouter la coordonnée radiale à la mesure. Des détecteurs mesurant la profondeur d'interaction ont été proposés. Une alternative est l'utilisation de la géométrie axiale : les modules de détection sont alors orientés de façon axiale, parallèlement au patient. Cette géométrie permet une mesure de la profondeur d'interaction (plan transverse) ainsi que de la position axiale (plan axial) grâce au couplage de deux photo-détecteurs à chaque extrémité.

L'article IEEE Trans on NucScience NS-41, pp 14411445(1994) W W Moses & al, décrit un procédé pour déterminer la profondeur de l'interaction dans un module PET. Le module détecteur est composé d'une matrice de cristal BGO de forme (3x3x30 mm) qui est couplée à une photodiode au silicium sur une face et, sur la face opposée, couplée à un tube photomultiplicateur. Les faces sont recouvertes d'un réflecteur, de sorte que l'amplitude du signal observé dans la photodiode et le tube photomultiplicateur dépend de la profondeur de l'interaction du photon (511 keV) dans le cristal de scintillateur. Le rapport de ces deux signaux peut être alors utilisé pour déterminer la profondeur de l'interaction d'un événement en fonction de chaque cas. L'article, *"*High resolution TOF PET with DOI : a proof of principle", Cosentino et al. décrit une méthode de traitement des surfaces d'un scintillateur, comprenant des photodétecteurs appropriés, de l'électronique et des algorithmes spécifiques pour l'analyse des données brutes, afin d'obtenir un compromis optimal entre le détecteur, l'énergie, le temps et la résolution de profondeur de l'interaction. Chaque scintillateur aura, à ses extrémités, deux SIPMs couplés afin de collecter de la lumière de scintillation autant que possible et d'optimiser ainsi la résolution en énergie. Le rôle de chaque détecteur consiste à détecter les rayons gamma de 511 keV émis, en coïncidence avec l'un des détecteurs externes. Le document US 2013/020487 A1 divulgue un procédé de détermination de la profondeur d'interaction sur la base d'une différence dans les temps d'arrivé de photons sur un pixel unique.

Face au problème de la détermination de la profondeur de l'interaction (DOI), plusieurs solutions ont été proposées :
- Utiliser un empilement de cristaux de natures différentes (ex BGO/GSO), mais cette solution est très coûteuse et complexe et ne permet qu'une précision limitée.
- Jouer sur le pouvoir réfléchissant des pixels, sur leur longueur via le polissage des réflecteurs. Mais cette solution est délicate à réaliser de manière industrielle et son décodage n'est pas absent d'ambiguïté.
- Lire le pixel à ses deux extrémités, ce qui permet par ratio d'intensité lumineuse d'estimer la position de l'interaction. C'est la solution la plus viable. Elle a cependant plusieurs défauts :
   ∘ Elle double le nombre de canaux électroniques nécessaires
   ∘ Le traitement des mesures est complexe
   ∘ Une couche de détecteurs est traversée par le rayonnement ce qui induit de la diffusion Compton
   ∘ Cette double lecture dégrade la mesure de l'énergie de l'interaction

Face à ce problème une solution nouvelle basée sur le fait qu'il est maintenant possible de mesurer très précisément (<100 ps) le temps d'arrivée des premiers photons sur un détecteur idoine (i.e Si-PMT) pour chaque pixel et d'enregistrer ensuite de manière précise l'intégrale de l'énergie émise par cet événement.

Par ailleurs, les scintillateurs de type LSO sont chers et il serait avantageux de pouvoir utiliser pour le PET des scintillateurs de type halogénures de Lanthane, moins chers et plus rapides que le LSO et ses dérivés. Cependant, leur résolution spatiale est dégradée par un nombre élevé d'événements pour lesquels il y a une diffusion Compton et, par conséquent, l'énergie de l'interaction est déposée sur un ou plusieurs pixels adjacents.

### EXPOSE DE L'INVENTION

L'invention vise à proposer un procédé de détermination de la profondeur d'une interaction dans un détecteur pixélisé de radiation gamma. Le procédé est caractérisé en ce qu'il comprend les étapes suivantes :
- détecter des premiers photons sur le détecteur ;
- mesurer le temps d'arrivée (T_{pc}) desdits premiers photons sur le détecteur pour un pixel central; ce temps est égal à Tᵢ + Z / (c/n); où Tᵢ est le temps d'interaction ; Z est la profondeur de l'interaction sur le détecteur et c/n correspond à la vitesse de propagation du rayonnement dans ledit pixel central ;
- mesurer le temps d'arrivée (Tₚₐ) des premiers photons dans un pixel adjacent audit pixel central; ce temps est environ égale à Ti + Z / (c/2n) ; où Tᵢ est le temps d'interaction ; Z est la profondeur de l'interaction sur le détecteur et c/2n correspond à la vitesse de propagation du rayonnement dans ledit pixel adjacent au pixel central ;
- comparer le temps (Tₚₐ) avec le temps (T_{pc}) afin d'estimer la profondeur d'interaction (Z) du fait de la vitesse de propagation différente de la lumière dans un pixel adjacent au pixel central ;
- intégrer le rayonnement émis sur l'ensemble de l'émission d'un scintillateur du détecteur afin de déterminer l'énergie de l'interaction ;
- enregistrer l'intégrale de l'énergie émise par cette détection.

Il s'agit ici de mesurer le temps d'arrivée des premiers photons sur chaque pixel, individuellement.

Du fait de réflexions multiples sur la surface d'un pixel adjacent au pixel central, la vitesse de la propagation de la lumière (c/2n) dans ce pixel adjacent est réduite d'un facteur deux (limite pour un pixel diffuseur parfait infiniment long).

L'invention concerne en outre un détecteur de radiation gamma pour la mise en œuvre du procédé ci-dessus comprenant une source de rayon gamma γ, un cristal scintillateur équipé d'au moins un photo-détecteurs capable de détecter la lumière émise individuellement sur chacun des pixels, un composant microélectronique de type ASIC étant couplé audit photodétecteur et apte à mesurer le temps d'arrivée des premiers photons sur un pixel avec une précision inférieure à 100 ps et capable d'intégrer le rayonnement émis sur l'ensemble de l'émission du scintillateur en environ 500 ns pour déterminer l'énergie de l'interaction, la lecture dudit au moins un photo-détecteurs étant effectuée par ledit composant micro-électronique, caractérisé en ce que le scintillateur est pixélisé, en ce que le composant micro-électronique est apte à mesurer le temps d'arrivée (Tpc) des premiers photons sur un premier pixel central et le temps d'arrivée (Tpa) des premiers photons sur un premier pixel adjacent audit premier pixel central de telle sorte qu'une comparaison entre le temps (Tpc) et le temps (Tpa) permet d'estimer la profondeur d'interaction (Z), et d'intégrer ensuite l'énergie émise.

Avantageusement, le détecteur est apte à mesurer un nombre de photons détectés sur la durée de propagation de la lumière sur la longueur de chaque pixel, soit les deux cent à six cents premières picosecondes ; ledit nombre de photons détectés dépend de l'angle solide avec lequel est vue l'interaction à une énergie de photons donnée. Cela a pour avantage de réduire l'ambiguïté dans le cas où il y un Compton. En effet, dans le cas de Compton les deux photons arrivent en même temps sur les pixels adjacents, mais le nombre de photons détectés dans le pixel adjacent est faible.

Il est classique pour le PET de vouloir mesurer le temps d'arrivée des premiers photons sur un pixel (Trigger). Ensuite on cherche également à connaitre l'énergie du photon gamma incident. On mesure donc sur un temps long (plusieurs centaines de ns) le nombre de photons détectés après ce premier trigger. Ces mesures classiques restent pertinentes, cependant, selon la présente invention, on ajoute une autre mesure relative au nombre de photons détectés après le trigger pendant une durée brève (100 à 600 ps) inférieure à 2-3 fois le temps de transfert de la lumière dans le pixel. En effet ces premiers photons détectés sont majoritairement des photons non diffusés. De plus, le nombre de photons non diffusés détectés pendant un temps donné dépend de la profondeur d'interaction et par conséquent de l'angle solide avec lequel est vue l'interaction.

De préférence, les faces des pixels constitutifs du scintillateur sont diffusantes et les pixels sont séparés par un média diffusant semi-transparent.

Selon l'invention, le média diffusant semi-transparent comprend un cristal rugueux diffusant, une graisse optique ou une charge de poudre blanche dispersée dans la graisse optique tel que Nitrure de bore, alumine, sulfate de baryum.

Particulièrement, ledit média diffusant semi-transparent est apte à assurer un transfert partiel de la lumière du pixel central vers le pixel adjacent ainsi qu'une diffusion de la lumière traversant ou réfléchie par ledit média.

De préférence, le scintillateur émet l'essentiel de sa lumière en moins de 100 ns et est de préférence de type halogénure de Lanthane, LaBr3 et/ou ses dérivés.

Le scintillateur peut également être de type Silicate de lutétium (LSO, LYSO....) et/ou ses dérivés.

En effet, du fait de réflexions multiples sur la surface d'un pixel adjacent au pixel central, la vitesse de propagation de la lumière (c/2n) dans le pixel adjacent est réduite d'un facteur deux par un phénoméne de propagation aléatoire (limite pour un pixel diffuseur parfait infiniment long). Un procédé de calibrage temporel de plusieurs détecteurs de radiation gamma est défini ci-dessus. Le procédé est caractérisé en ce qu'il comprend les étapes suivantes :
- envoyer une impulsion de lumière laser pour illuminer lesdits détecteurs simultanément ;
- mesurer le temps d'arrivée des photons 1, 2, 3 pour tous les canaux ;
- calibrer la réponse temporelle de chaque élément détecteur.

L'invention concerne encore l'utilisation du détecteur de radiation ci-dessus dans une imagerie de type PET.

### BREVE DESCRIPTION DES FIGURES

D'autres caractéristiques, détails et avantages de l'invention ressortiront à la lecture de la description qui suit, en référence aux figures annexées :
- la figure 1 montre une partie d'un détecteur pixellisé selon l'invention ainsi que la cartographie temporelle d'un rayon gamma dans un pixel central et dans un pixel adjacent audit pixel central d'un scintillateur segmenté ;
- la figure 2 montre la calibration temporelle des détecteurs ;
- la figure 3 montre une interaction directe (Exemple 1); et
- la figure 4 montre l'effet de Compton sur un pixel adjacent n+1 (Exemple 2).

### DESCRIPTION DETAILLEE

Dans les détecteurs de rayons gamma par scintillation en général, il est préférable de connaître la profondeur de l'interaction vis à vis de la face d'entrée du rayonnement.

Face au problème de détermination de la profondeur d'une interaction plusieurs solutions ont été présentées ci-dessus. Cependant, les solutions proposées ont chacune des défauts : - doublement du nombre de canaux électronique nécessaires au traitement ; - le traitement des mesures est complexe ; - une couche de détecteur est traversée par le rayonnement, induisant de la diffusion Compton, dégradant ainsi la mesure de l'énergie de l'interaction.

Face au problème de détermination de la profondeur d'une interaction, l'invention propose une solution nouvelle basée sur le fait qu'il est maintenant possible de mesurer très précisément, avec un temps inférieur à 100 ps, le temps d'arrivée des premiers photons sur un détecteur idoine, i.e Si-PMT, pour chaque pixel et d'enregistrer ensuite de manière précise l'intégrale de l'énergie émise par cet événement (détection).

Pour cela le procédé de détermination de la profondeur d'une interaction dans un détecteur de radiation gamma selon la présente invention comprend, dans une première étape, la détection des premiers photons sur le détecteur, ensuite, on mesure le temps d'arrivée (T_{pc}) desdits premiers photons sur le détecteur pour un pixel central 12 ; ce temps est égal à Tᵢ + Z / (c/n); où Tᵢ est le temps d'interaction ; Z est la profondeur de l'interaction sur le détecteur et c/n correspond à la vitesse de propagation du rayonnement dans ledit pixel central. La troisième étape du procédé consiste en la mesure du temps d'arrivée (Tₚₐ) des premiers photons dans un pixel adjacent 13 audit pixel central. Ce temps est environ égal à Ti + Z / (c/2n) ; où Tᵢ est le temps d'interaction ; Z est la profondeur de l'interaction sur le détecteur et c/2n correspond à la vitesse de propagation du rayonnement dudit pixel adjacent au pixel central. En comparant le temps (T_{pc}) et le temps (Tₚₐ), on peut estimer la profondeur de l'interaction, et, en intégrant le rayonnement émis sur l'ensemble de l'émission d'un scintillateur 10 du détecteur, on peut déterminer l'énergie de l'interaction et enregistrer l'intégrale de l'énergie émise par cette détection. Selon le procédé de la présente invention, on peut mesurer individuellement le temps d'arrivée des premiers photons sur chaque pixel.

L'invention comprend en outre un détecteur pour la mise en œuvre du procédé ci-dessus. Dans le détecteur, le scintillateur est pixélisé avec un élément détecteur correspondant à chaque pixel et il y a une différence entre le pixel où a lieu l'interaction et les pixels adjacents où se diffuse la lumière.

Dans une configuration de PET Classique, on souhaite envoyer un maximum de lumière vers la face de sortie du pixel. C'est pourquoi les faces latérales des scintillateurs (pixels) sont typiquement diffusantes et revêtues d'un réflecteur blanc dont la fonction est de renvoyer la lumière vers le pixel central. Cette couche de réflecteur agit donc comme un isolateur optique. Autrement dit, il n'y a pas de joint optique de sorte que le saut d'indice confine la lumière dans le pixel central. Dans ce type de configurations l'interface comprend du cristal rugueux (diffusant), de l'air ou du réflecteur diffus, typiquement du téflon.

La configuration selon l'invention a des objectifs différents. La fonction de l'interface optique selon la présente invention est notamment d'assurer :
- un transfert partiel de la lumière du pixel central vers le pixel adjacent.
- une diffusion de la lumière traversant ou réfléchie par cet interface.

La lumière ne doit cependant pas être perdue, c'est pourquoi la conception de cette interface est différente, Autrement dit ladite interface peut comprendre : un cristal rugueux diffusant, une graisse optique de manière à éviter un saut d'indice, ou bien une charge de poudre blanche dispersée dans la graisse optique tel que : Nitrure de bore, alumine, Sulfate de baryum, BaSO4.

L'objectif principal de la présente invention est que tout le rayonnement touchant cette face du scintillateur soit diffusée, majoritairement dans le pixel central, mais aussi en partie dans le pixel adjacent.

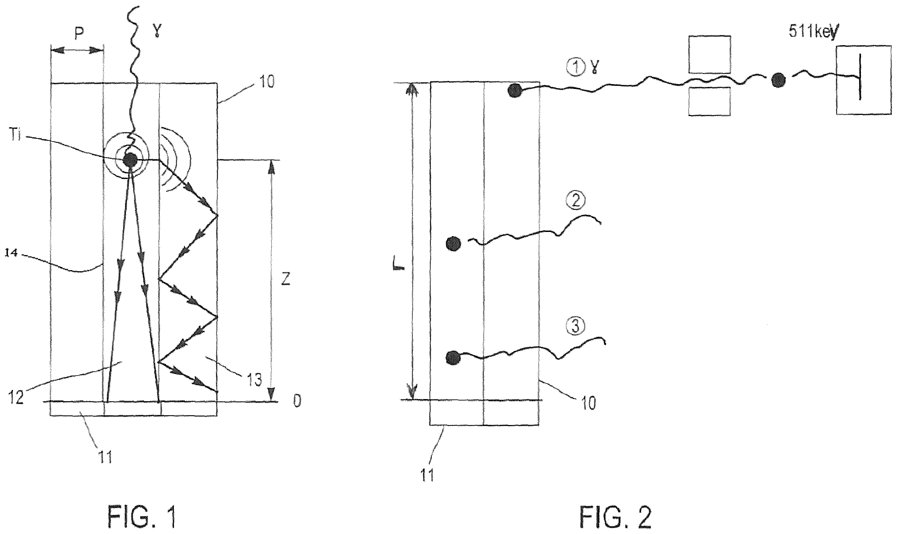

Dans le détecteur selon l'invention, on suppose que les faces des pixels sont diffusantes ou grattées, et que les pixels sont séparés par un média diffusant semi-transparent, composé d'un média continu de type joint optique et d'une charge diffusante telle que du Teflon ou de la poudre blanche telle que l'alumine ou le carbonate de baryum. Sur la figure 1, la référence 14 correspond audit joint optique. Ce joint optique placé à la frontière entre deux pixels et est composé de
- Cristal rugueux (diffusant)
- Graisse optique de manière à éviter un saut d'indice
- Charge de poudre blanche dispersée dans la graisse optique (Nitrure de bore, alumine, sulfate de baryum ,BaS04,...)

Dans le pixel où a lieu l'interaction initiale, qu'elle soit primaire ou de type Compton, le rayonnement est émis de manière isotrope. La figure 1 montre une partie d'un détecteur pixélisé selon l'invention dans lequel le procédé est mis en œuvre. Dans ce détecteur, une partie des premiers photons émis vers le scintillateur 10 se propage en ligne droite vers un photo-détecteur 11. Le photo-détecteur 11 est capable de détecter la lumière émise sur tous les pixels et il est couplé à un composant micro-électronique de type ASIC (non représenté). Ce composant est apte à mesurer individuellement, avec une précision inférieure à 100 ps, le temps d'arrivée des premiers photons (ou triggers) sur chaque pixel. De plus, ledit composant électronique est capable d'intégrer le rayonnement émis sur l'ensemble de l'émission du scintillateur 10, en environ 500 ns, afin de déterminer l'énergie de l'interaction.

Ainsi, le composant microélectronique est apte à mesurer le temps d'arrivée (T_{pc}) des premiers photons sur un premier pixel central 12 ainsi que le temps d'arrivée (Tₚₐ) des premiers photons sur un premier pixel adjacent 13 audit premier pixel central.

La figure 1 montre que le temps d'arrivée des premiers photons sur un pixel central 12 est égal à Tᵢ + Z / (c/n), dans lequel Tᵢ correspond à l'instant d'interaction, Z est la coordonnée du point d'interaction et correspond à la distance d'interaction par rapport au photo-détecteur 11 ; autrement dit, Z correspond à la profondeur de l'interaction et (c/n) correspond à la vitesse du rayonnement dans le cristal, n variant de 1,7 à 1,9 suivant le cristal employé. Dans cette configuration les premiers photons détectés n'ont jamais été diffusés.

Dans la mesure où l'énergie du photon est connue (i.e 511 KeV), on peut mesurer le nombre de photons détectés sur la durée de propagation de la lumière sur la longueur du pixel soit les deux cent à six cents premières picosecondes, ledit nombre de photons détectés dépend de l'angle solide avec lequel est vue l'interaction. En mesurant ce nombre de photons, on peut déduire Z de manière statistique.

De plus, la figure 1 montre que dans les pixels adjacents 13, le premier rayon détecté correspond aux photons diffusés à la cote Z sur la surface diffusante du pixel. Ce rayon subit des réflexions multiples avant d'atteindre le photo-détecteur, suivant un processus dit de marche de l'aveugle, tel que schématisé sur la figure 1. Dans ce cas, la vitesse de propagation du rayonnement est équivalente à la vitesse de groupe dudit rayonnement multi diffusé et est égale à environ (c/2n). Par conséquent, , le temps d'arrivée des premiers photons dans un pixel adjacent 13 au pixel central 12 est environ égal à Ti + Z (c/2n) ; dans lequel Ti est l'instant d'interaction, Z est la coordonnée du point d'interaction correspondant à la distance d'interaction par rapport au photo-détecteur, et c/2n est environ la vitesse de propagation (vitesse de groupe) de ce rayonnement dans le pixel adjacent 13.

La comparaison entre le temps d'arrivée du rayonnement dans le pixel central 12 à savoir (Ti + Z/(c/n)) et le temps d'arrivée dudit rayonnement dans le pixel adjacent 13 à savoir (Ti + Z/(c/2n)) permet donc d'estimer Z, du fait de la vitesse de propagation différente de la lumière dans ces pixels.

Concrètement, une imagerie temporelle des pixels lors d'une interaction permet d'estimer la profondeur de cette interaction. Si L est la longueur d'un pixel, la profondeur de l'interaction est environ L-Z. La moyenne des « déphasages » temporels de tous les pixels adjacents pourrait à ce titre être plus fiable que les valeurs individuelles.

Si l'on suppose un détecteur parfait, ce déphasage de temps d'arrivée des n premiers photons aura une certaine fluctuation statistique autour de la valeur Z/(c/n) - Z/(c/2n). Dans ce cas, on aura donc intérêt à calibrer expérimentalement le déphasage sur un bloc de pixels en utilisant par exemple une source à 511 KeV collimatée que l'on mesurera pour plusieurs côtes Z sur le bloc. L'analyse statistique d'une telle expérience permettra d'estimer la précision de localisation atteignable par le procédé et, le cas échéant, d'appliquer des corrections expérimentales.

Les scintillateurs de type halogénure de Lanthane, LaBr3 et ses dérivés, ont l'avantage d'être moins chers et plus rapides que les silicates de lutétium. L'utilisation de ces scintillateurs est préférée pour la mise en œuvre du procédé de la présente invention. En effet, le scintillateur de type halogénure de Lanthane, LaBr3, émet l'essentiel de sa lumière en moins de 100 ns.

Néanmoins, les scintillateurs de type Silicate de Lutetium, LSO, LYSO et/ou ses dérivés peuvent aussi être utilisés.

La figure 2 montre le principe du procédé de calibrage temporel des détecteurs. Ce procédé consiste en un calibrage temporel des détecteurs pixélisés entre eux, par l'observation d'une impulsion de lumière laser qui les illumine tous simultanément. Dans cette géométrie, le temps d'arrivée des photons 1, 2 et 3 est identique pour tous les canaux. Ceci permet de calibrer la réponse temporelle de chaque élément du photo-détecteur 11.

Le procédé de détermination de la profondeur d'une interaction selon la présente invention n'empêche pas, bien entendu, l'utilisation des modalités habituelles de décodage en intensité lumineuse type PET des blocs de pixels pour mesurer l'énergie de l'interaction et repérer le pixel central où a eu lieu l'interaction.

Le procédé selon l'invention permet d'améliorer fortement la qualité de l'image obtenue dans le cas où le scintillateur est très rapide, mais pas très dense, et donc sujet à la diffusion Compton. En effet, dans le cas d'une diffusion Compton, le second pixel donnant lieu à une émission sera un pixel proche, juxtaposé directement (n+1) ou indirectement (n+2) pour des raisons géométriques. Dans ce second pixel aura lieu une interaction comme dans le pixel initial. Soit p, le pas du réseau. Pour qu'un événement soit valide il faut qu'il soit distant temporellement de l'événement initial de moins de : 1pc pour n+1 (10 ps) et de 2pc (20 ps) pour n+2. Ceci permet de séparer les événements « Compton » exploitables, vis-à-vis du bruit de fond.

Une analyse plus complexe de la cartographie temporelle et de l'intensité de cet événement permet, dans la plupart des cas, de déterminer où a eu lieu la première interaction. La précision sur la profondeur de l'interaction (DOI) peut être dégradée mais, comme on conservera une donnée très précise sur Ti, on améliore la résolution spatiale vis à vis de l'art antérieur, grâce au Temps de vol (Time of Flight, TOF).

Les avantages de l'invention sont nombreux :
- Ce procédé peut être couplé avec les méthodes précédentes. En particulier, il permet une mesure particulièrement précise de l'instant de l'interaction (Ti)
- Avec ce type de décodage, expliqué ci-dessus, les scintillateurs intrinsèques les plus rapides et les plus lumineux sont ceux qui donneront la meilleure résolution temporelle et donc spatiale. Or, il se trouve que les halogénures de Lanthane sont moins onéreux que les oxydes de lutétium utilisés aujourd'hui.

- Avec ce type de scintillateurs, beaucoup d'événements inexploitables aujourd'hui, du fait de l'effet Compton qui induit une incertitude sur le pixel qui a subi la première interaction, sont exploitables.
- Cette méthode de mesure de la profondeur de l'interaction (DOI) ne requiert pas d'avoir deux couches de détecteurs à chaque extrémité du cristal, ce qui réduit fortement le coût du système de détection selon l'invention.
- Cette méthode requiert que tous les pixels soient traités de manière diffusive identique. Elle est donc adaptée à une mise en place à l'échelle industrielle.

### Exemple 1 Interaction directe

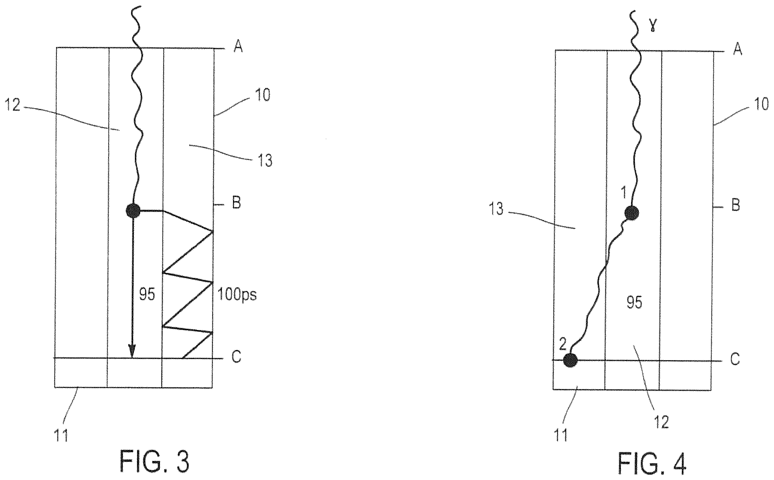

La figure 3 montre un exemple d'interaction directe dans un pixel central 12 et un pixel adjacent 13. Soit un pixel de LaBr**3** (indice n = 1,9) et d'une longueur L de 30 mm. Le nombre de photons directs détéctables est pris arbitrairement à 100.
Sur les 3 points, A = face d'entrée, B = milieu, C= face de sortie, on a :
Sur un pixel central (n), le temps de propagation du rayonnement et le nombre de photons directs est :

| | |
|---|---|
| A = 190 ps | 1 |
| B = 95 ps | 2 |
| C = 0 ps | 100 |

Sur un pixel voisin (n+1), le temps de propagation du rayonnement est :
A = 390 ps
B = 200 ps
C = 10 ps

Le contraste du temps de propagation entre n et n+1 est :
A = 200 ps
B = 105 ps
C = 10 ps

### Exemple 2 Interaction Compton

La figure 4 montre un exemple de Compton sur un pixel adjacent 13 (n+1). Soit un pixel de LaBr3 (indice n = 1,9) et d'une longueur L de 30 mm. Le nombre de photons directs est 100.
Sur les 3 points, A = face d'entrée, B = milieu, C= face de sortie, on a : Temps de propagation du rayonnement et nombre photons directs est:

| | |
|---|---|
| A = 190 ps | 1 |
| B = 95 ps | 2 |
| C = 0 ps | 100 |

Sur un pixel voisin (n+1) le temps de propagation du rayonnement est :
A = 390 ps
B = 200 ps
C = 10 ps
Dans le pixel voisin (n+1) effet Compton avec décalage d'une demi longueur:
(A ->B ou B -> C)
B = 145 ps
C = 60 ps
Le contraste avec le pixel central est :
A = - 45 ps
B = -35 ps
On peut reconnaitre un effet Compton en ce que la détection est quasi simultanée sur 2 pixels adjacents.

L'invention concerne, en outre, l'utilisation du détecteur de radiation ci-dessus dans une imagerie de type PET. Le procédé de détermination de la profondeur d'une interaction décrit ci-dessus, n'est pas exclusif du PET. Il peut être utilisé hors du contexte d'anti-coïncidence pour mesurer la profondeur de l'interaction (DOI) dans un réseau scintillant quelconque, à condition que l'émission de lumière soit rapide. Cependant, c'est dans la modalité PET que l'invention présente le maximum d'intérêt.

## Revendications

1. Procédé de détermination de la profondeur d'une interaction dans un détecteur pixélisé de radiation gamma comprenant les étapes suivantes :
- détecter des premiers photons sur le détecteur ;
- mesurer le temps d'arrivée (T_{pc}) desdits premiers photons sur le détecteur (10) pour un pixel central (12) ; ce temps est égal à Tᵢ + Z / (c/n); où Tᵢ est le temps d'interaction ; Z est la profondeur de l'interaction sur le détecteur et c/n correspond à la vitesse de propagation du rayonnement dans ledit pixel central ;
- mesurer le temps d'arrivée (Tₚₐ) des premiers photons dans un pixel adjacent (13) audit pixel central; ce temps est environ égal à Ti + Z / (c/2n) ; où Tᵢ est le temps d'interaction ; Z est la profondeur de l'interaction sur le détecteur et c/2n correspond à la vitesse de propagation du rayonnement dans ledit pixel adjacent au pixel central ;
- comparer ledit temps d'arrivée (Tpa) des premiers photons pour un pixel adjacent (13) avec ledit temps d'arrivée (Tpc) des premiers photons pour un pixel central (12) afin d'estimer la profondeur d'interaction (Z) du fait de la vitesse de propagation différente de la lumière dans un pixel adjacent au pixel central ;
- intégrer le rayonnement émis sur l'ensemble de l'émission d'un cristal (10) du détecteur (10) afin de déterminer l'énergie de l'interaction ;
- enregistrer l'intégrale de l'énergie émise par cette détection.

2. Détecteur de radiation gamma pour la mise en œuvre du procédé selon la revendication 1 comprenant une source de rayon gamma γ, un cristal scintillateur (10) pixelisé et équipé d'au moins un photo-détecteur (11) capable de détecter la lumière émise individuellement sur chacun des pixels, un composant microélectronique de type ASIC étant couplé audit photo-détecteur et apte à mesurer le temps d'arrivée des premiers photons sur un pixel avec une précision inférieure à 100 ps et capable d'intégrer le rayonnement émis sur l'ensemble de l'émission du scintillateur (10) en environ 500 ns pour déterminer l'énergie de l'interaction, la lecture dudit au moins un photo-détecteurs (11) étant effectuée par ledit composant micro-électronique, **caractérisé en ce que** le composant micro-électronique est en outre apte à mesurer le temps d'arrivée (Tpc) des premiers photons sur un premier pixel central (12) et le temps d'arrivée (Tpa) des premiers photons sur un premier pixel adjacent (13) audit premier pixel central de telle sorte qu'une comparaison entre le temps (Tpc) et le temps (Tpa) permet d'estimer la profondeur d'interaction (Z), et d'intégrer ensuite l'énergie émise.

3. Détecteur de radiation gamma selon la revendication 2 dans lequel les faces des pixels constitutifs du scintillateur (10) sont diffusantes et les pixels sont séparés par un média diffusant semi-transparent.

4. Détecteur de radiation gamma selon la revendication 3 dans lequel le média diffusant semi-transparent comprend un cristal rugueux diffusant, une graisse optique ou une charge de poudre blanche dispersée dans la graisse optique tel que Nitrure de bore, alumine, sulfate de baryum.

5. Détecteur de radiation gamma selon les revendications 3 ou 4 dont ledit média diffusant semi-transparent est apte à assurer un transfert partiel de la lumière du pixel central vers le pixel adjacent ainsi que qu'une diffusion de la lumière traversant ou réfléchie par ledit média.

6. Détecteur de radiation gamma selon l'une des revendications 2 à 5 où le détecteur est apte à mesurer un nombre de photons détectés sur la durée de propagation de la lumière sur la longueur de chaque pixel, soit sur les deux cent à six cents premières picosecondes, ledit nombre de photons détectés dépendant de l'angle solide avec lequel est vue l'interaction à une énergie de photon donnée.

7. Détecteur de radiation selon l'une des revendications 3 à 7 dans lequel le scintillateur émet l'essentiel de sa lumière en moins de 100 ns, et est de préférence de type halogénure de Lanthane, LaBr3 et/ou ses dérivés.

8. Détecteur de radiation selon l'une des revendications 2 à 6 dans lequel le scintillateur est de type Silicate de Lutétium, LSO, LYSO et/ou ses dérivés.

9. Utilisation du détecteur de radiation selon l'une des revendications 2 à 8 dans une imagerie de type PET.

## Patentansprüche

1. *Verfahren zur Bestimmung der Tiefe einer Interaktion auf einem verpixelten Gammastrahlungsdetektor, das die folgenden Schritte umfasst:*
- *Erfassen von ersten Photonen in dem Detektor;*
- *Messen der Ankunftszeit (T_{pc}) der ersten Photonen auf dem Detektor (10) für ein zentrales Pixel (12); wobei diese Zeit gleich Tᵢ* + *Z* / *(c*/*n) ist; wobei Tᵢ die Interaktionszeit ist; Z die Tiefe der Interaktion auf dem Detektor ist und c*/*n der Ausbreitungsgeschwindigkeit der Strahlung in dem zentralen Pixel entspricht;*
- *Messen der Ankunftszeit (Tₚₐ) der ersten Photonen in einem benachbarten Pixel (13) zu dem zentralen Pixel; wobei diese Zeit ungefähr gleich Tᵢ* + *Z* / *(c*/*2n) ist; wobei Tᵢ die Interaktionszeit ist; Z die Tiefe der Interaktion auf dem Detektor ist und c*/*2n der Ausbreitungsgeschwindigkeit der Strahlung in dem benachbarten Pixel zu dem zentralen Pixel entspricht;*
- *Vergleichen der Ankunftszeit (Tpa) der ersten Photonen für ein benachbartes Pixel (13) mit der Ankunftszeit (Tpc) der ersten Photonen für ein zentrales Pixel (12), um die Interaktionstiefe (Z) aufgrund der unterschiedlichen Ausbreitungsgeschwindigkeit des Lichts in einem benachbarten Pixel zu dem zentralen Pixel zu schätzen;*
- *Integrieren der über die Gesamtheit der Abgabe eines Kristalls (10) des Detektors (10) abgegebenen Strahlung, um die Energie der Interaktion zu bestimmen;*
- *Aufzeichnen des Integrals der durch diese Erfassung abgegebenen Energie.*

2. *Gammastrahlungsdetektor zur Durchführung des Verfahrens nach Anspruch 1, der eine Gammastrahlungsquelle y und einen Kristallszintillator (10) umfasst, der verpixelt ist und mit mindestens einem Fotodetektor (11) ausgestattet ist, der das einzeln abgegebene Licht auf jedem der Pixel erfassen kann, wobei ein mikroelektronisches Bauelement vom ASIC-Typ an den Fotodetektor gekoppelt ist und dazu fähig ist, die Ankunftszeit der ersten Photonen auf einem Pixel mit einer Präzision von weniger als 100 ps zu messen, und die über die Gesamtheit der Abgabe des Szintillators (10) abgegebene Strahlung in ungefähr 500 ns integrieren kann, um die Energie der Interaktion zu bestimmen, wobei das Lesen des mindestens einen Fotodetektors (1 1) von dem mikroelektronischen Bauelement vorgenommen wird, **dadurch gekennzeichnet, dass** das mikroelektronische Bauelement außerdem dazu fähig ist, die Ankunftszeit (Tpc) der ersten Photonen auf einem ersten zentralen Pixel (12) und die Ankunftszeit (Tpa) der ersten Photonen auf einem ersten benachbarten Pixel (13) zu dem ersten zentralen Pixel derart zu messen, dass ein Vergleich zwischen der Zeit (Tpc) und der Zeit (Tpa) ermöglicht, die Interaktionstiefe (Z) zu schätzen und anschließend die abgegebene Energie zu integrieren.*

3. *Gammastrahlungsdetektor nach Anspruch 2, wobei die Flächen von Pixeln, die den Szintillator (10) bilden, streuend sind und die Pixel durch ein halbtransparentes streuendes Medium getrennt sind.*

4. *Gammastrahlungsdetektor nach Anspruch 3, wobei das halbtransparente streuende Medium einen streuenden rauen Kristall, ein optisches Fett oder einen weißen Pulverfüllstoff, der in dem optischen Fett verteilt ist, wie Bornitrid, Aluminiumoxid, Bariumsulfat, umfasst.*

5. *Gammastrahlungsdetektor nach den Ansprüchen 3 oder 4, wobei das halbtransparente streuende Medium dazu fähig ist, einen partiellen Transfer des Lichts des zentralen Pixels zu dem benachbarten Pixel sowie eine Streuung des Lichts, das durch das Medium hindurchtritt oder von diesem reflektiert wird, sicherzustellen.*

6. *Gammastrahlungsdetektor nach einem der Ansprüche* 2 *bis* 5, *wobei der Detektor dazu fähig ist, eine Anzahl von Photonen zu messen, die während der Dauer der Verbreitung des Lichts über die Länge jedes Pixels erfasst werden, d. h. über zweihundert bis sechshundert erste Pikosekunden, wobei die Anzahl von erfassten Photonen von dem Raumwinkel abhängt, mit dem die Interaktion für eine gegebene Photonenenergie betrachtet wird.*

7. *Gammastrahlungsdetektor nach einem der Ansprüche* 3 *bis* 7, *wobei der Szintillator den Großteil seines Lichts in weniger als 100 ns abgibt und vorzugsweise vom Typ Lanthanhalogenid, LaBr₃ und*/*oder seinen Derivaten ist.*

8. *Gammastrahlungsdetektor nach einem der Ansprüche* 2 *bis* 6, *wobei der Szintillator vom Typ Lutetiumsilikat, LSO, LYSO und*/*oder seinen Derivaten ist.*

9. *Verwendung des Gammastrahlungsdetektors nach einem der Ansprüche 2 bis* 8 *in einer Bildgebung vom PET-Typ.*

## Claims

1. *Method of determination of the depth of an interaction in a pixelated gamma radiation detector comprising the following steps:*
- *detect initial photons on the detector;*
- *measure the arrival time (T_{pc}) of said initial photons on the detector (10) for a central pixel (12); this time is equal to Tᵢ* + *Z* / *(c*/*n); where Tᵢ is the interaction time; Z is the depth of the interaction on the detector and c*/*n corresponds to the speed of propagation of radiation in said central pixel;*
- *measure the arrival time (Tₚₐ) of the first photons in a pixel (13) adjacent to said central pixel; this time is approximately equal to Tᵢ* + *Z* / *(c*/*2n); where Tᵢ is the interaction time; Z is the depth of the interaction on the detector and c*/*2n corresponds to the speed of propagation of radiation in said pixel adjacent to the central pixel;*
- *compare said arrival time (Tpa) of the first photons for an adjacent pixel (13) with said arrival time (Tpc) of the first photons for* a *central pixel (12) in order to estimate the depth of interaction (Z) due to the different speed of propagation of light in a pixel adjacent to the central pixel;*
- *integrate the radiation emitted over the whole of the emission of a crystal (10) of the detector (10) in order to determine the energy of the interaction;*
- *record the integral of the energy emitted by this detection.*

2. *Gamma radiation detector for implementing the method according to claim 1, comprising a gamma ray source* γ*,* a *pixelated scintillator crystal (10) and equipped with at least one photodetector (11) capable of detecting the light emitted individually on each of the pixels, a microelectronic component of the ASIC type being coupled to said photodetector and capable of measuring the arrival time of the first photons on a pixel with a precision of lower than 100 ps and capable of integrating the radiation emitted over the whole of the emission of the scintillator (10) in approximately 500 ns in order to determine the energy of the interaction, reading of said at least one photodetector (11) being carried out by said microelectronic component, **characterised in that** the microelectronic component is further capable of measuring the arrival time (Tpc) of the first photons on a first central pixel (12) and the arrival time (Tpa) of the first photons on a first pixel (13) adjacent to said first central pixel in such a way that a comparison between the time (Tpc) and the time (Tpa) makes it possible to estimate the depth of interaction (Z), and then integrate the energy emitted.*

3. *Gamma radiation detector according to claim 2, in which the faces of the pixels which constitute the scintillator (10) are diffusing and the pixels are separated by a semitransparent diffusing medium.*

4. *Gamma radiation detector according to claim 3, in which the semitransparent diffusing medium comprises a coarse diffusing crystal, an optical grease or a charge of white powder dispersed in the optical grease such as boron nitride, alumina or barium sulphate.*

5. *Gamma radiation detector according to claim 3 or 4, of which said semitransparent diffusing medium is capable of ensuring partial transfer of light from the central pixel to the adjacent pixel as well as diffusion of light traversing or reflected by said medium.*

6. *Gamma radiation detector according to one of claims 2 to 5, where the detector is capable of measuring a number of photons detected over the time of propagation of light over the length of each pixel, that is, over the two hundred to six hundred first picoseconds, said number of photons detected depending on the solid angle at which the interaction is seen at a given photon energy.*

7. *Radiation detector according to one of claims 3 to 7*, *in which the scintillator emits most of its light in less than 100 ns, and is preferably of the lanthanum halide type, LaBr3 and*/*or derivatives thereof.*

8. *Radiation detector according to one of claims 2 to 6, in which the scintillator is of the lutetium silicate type, LSO, LYSO and*/*or derivatives thereof.*

9. *Use of the radiation detector according to one of claims 2 to 8 in imaging of the PET type.*
